# EUROPÄISCHE PATENTSCHRIFT

(11) **EP 3 611 017 B1**
(45) Veröffentlichungstag und Bekanntmachung des Hinweises auf die Patenterteilung: **31.03.2021**
(21) Anmeldenummer: 19190527.2
(22) Anmeldetag: 07.08.2019
(51) Int. Cl.: B32B 5/02, B32B 15/14, B32B 15/20, B32B 17/04, B32B 27/08, B32B 27/12, B32B 27/28, B32B 27/36, E04D 12/00

(54) **FEUERBESTÄNDIGE SCHUTZFOLIE**
FIRE RESISTANT PROTECTIVE FILM
FEUILLE DE PROTECTION RÉSISTANTE AU FEU

(30) Priorität: 17.08.2018 DE 102018120055
(43) Veröffentlichungstag der Anmeldung: 19.02.2020
(73) Patentinhaber: BMI Group Holdings UK Limited, Reading, RG1 1LX (GB)
(72) Erfinder: Schulze, Dirk, 60322 Frankfurt (DE); Sauerbier, Axel, 70825 Korntal-Münchingen (DE)
(74) Vertreter: Grundmann, Dirk

(56) Entgegenhaltungen:
- WO-A1-2017/126659
- DE-U1-202016 103 029

## Beschreibung

### Gebiet der Technik

Die Erfindung betrifft eine feuerbeständige Schutzfolie mit einer Metallfolie, einem darauf aufgebrachten Armierungsgewebe oder -gitter und einer Verbindungsschicht.

### Stand der Technik

Die CN 101798489 beschreibt eine Aluminiumfolie, auf der mittels eines Klebers eine Glasfaserarmierung aufgebracht ist.

Die DE 100 37 298 beschreibt eine Aluminiumfolie, auf der ein Glasfaservlies aufgebracht ist.

Die EP 1 090 969 B1 beschreibt eine Aluminiumfolie, auf der eine PET-Schicht aufgebracht ist, die wiederum mit Silikon beschichtet ist.

Die EP 0 603 633 B1 beschreibt eine Metallschicht, eine darauf aufgebrachte Glasfaserschicht und ein darauf aufgebrachtes Spinnvlies aus Polyethylen.

Eine gattungsgemäße Schutzfolie ist aus der DE 20 2016 103 029 U1 vorbekannt. Ein Glasfasergewebe ist dort in eine 6 bis 8 Mikrometer dicke Aluminiumschicht eingeprägt und auf eine PET-Schutzschicht aufgebracht. Die Aluminiumschicht ist ferner mit einer zweiten Schutzschicht versehen. Die DE 20 2016 103 029 U1 beschreibt eine mehrlagige Dampfsperrschicht bestehend aus einer einseitig mit einer PET-Schutzschicht verbundenen dünnen Aluminiumschicht.

In die Aluminiumschicht wird ein Glasfasergelege derart verklebt eingeprägt, dass dadurch eine verklebte und mechanisch verklammerte Verbindung entsteht. Auf diese Verklebung sind weitere Schichten aufgebracht.

Die WO 2017/126659 A1 beschreibt eine mehrschichtige feuerbeständige Schutzfolie, bei der eine Schicht aus Silikon bestehen kann.

Die DE 103 34 714 A1 beschreibt eine mit einer Metallisierung versehene Faserschicht, die auf einem wasserdampf-diffusionsoffenem Trägermaterial aufgebracht ist.

### Zusammenfassung der Erfindung

Zum Schutz von Bauteilen, z.B. von Dachkonstruktionen vor Feuchtigkeit, wird unterhalb der Dacheindeckung eine Unterspannbahn verwendet. Die Erfindung betrifft eine derartige Unterspannbahn und deren Verwendung zum Schutz von Bauwerken oder Teilen davon. Die erfindungsgemäße Folie kann aber auch auf der Innenseite einer Dachkonstruktion unterhalb der Dämmebene in der Art einer Dampfsperre verwendet werden. In besonderen Bereichen, insbesondere zum Anschluss an einem Schornstein, wird von einer derartigen Schutzfolie eine Feuerbeständigkeit insbesondere der Euroklasse A2 (klassifiziert nach EN 13501-1) verlangt.

Eine für die oben genannte Verwendung ausgebildete Folie sollte neben der Feuerbeständigkeit auch eine Wasserdichtigkeit und eine Luftdichtigkeit sowie eine Reißfestigkeit aufweisen. Darüber hinaus sollte die Oberseite und die Unterseite der Schutzfolie eine verklebbare Oberfläche aufweisen. Die Schutzfolie sollte darüber hinaus keine nachteilige wasseranziehende Wirkung besitzen, eine hohe Biegsamkeit und eine hohe Sperrwirkung für Wasserdampf, um auch als Dampfsperre verwendet werden zu können.

Der Erfindung liegt die Aufgabe zugrunde, ausgehend von dem eingangs genannten Stand der Technik eine vielfältig verwendbare feuerbeständige Schutzfolie anzugeben.

Gelöst wird die Aufgabe durch die in den Ansprüchen angegebene Erfindung, wobei die Unteransprüche nicht nur vorteilhafte Weiterbildungen der im Hauptanspruch angegebenen Erfindung darstellen, sondern auch eigenständige Lösungen der Aufgabe.

Zunächst und im Wesentlichen wird vorgeschlagen, dass oberhalb der Verbindungsschicht eine Kunststofffolie vorgesehen ist. Das erfindungsgemäße feuerbeständige Flächenobjekt besitzt somit auf einer Breitseitenoberfläche die Eigenschaften einer Metallfolie und auf der gegenüberliegenden Breitseite die Eigenschaft einer Kunststofffolie. Zwischen Kunststofffolie und Metallfolie ist ein Armierungsgewebe oder Armierungsgitter angeordnet. Letzteres ist mit der Verbindungsschicht sowohl mit der Metallfolie als auch mit der Kunststofffolie verbunden. In einer bevorzugten Weiterbildung der Erfindung besteht die Metallfolie aus Aluminium, das Armierungsgewebe oder -gitter aus Glasfasern. Die Verbindungsschicht kann eine Silikonschicht sein. Die Kunststofffolie kann eine PET-Folie sein. Es ist insbesondere vorgesehen, dass die Schutzfolie Unbrennbarkeit im Sinne der Euroklasse A2 (klassifiziert nach EN 13501-1) aufweist. Die besonders bevorzugte Ausgestaltung der Schutzfolie besteht aus dem unbrennbaren Aluminium, dem unbrennbaren Glasgewebe, aber einer brennbaren Folie, bei der es sich um eine Folie aus Polyethylenterephthalat (PET) handeln kann. Die Materialstärke der Metallfolie liegt in einem Bereich von 80 µm bis 200 µm, insbesondere in einem Bereich von 90 bis 150 µm Beträgt die Materialstärke bevorzugt mindestens 90 µm, so ist die Metallfolie in der Lage, ausreichend Wärme abzuleiten, so dass sich die Kunststofffolie nicht entzünden kann. Das Glasgewebe verleiht der Schutzfolie trotz der ansonsten nur gering reißfesten Metallfolie eine ausreichende Reißfestigkeit. Dabei kann es ausreichen, wenn das Armierungsgewebe oder Armierungsgitter ein Gewebe mit einem großen Fadenabstand ist, beispielsweise kann das Flächengewicht im Bereich zwischen 50 und 70 g/m² und insbesondere 58 g/m² liegen. Das Flächengewicht eines Armierungsgitters oder Armierungsgewebes kann aber auch in einem Bereich zwischen 30 und 100 g/m² liegen. Das insbesondere aus Glas bestehende Armierungsgewebe oder Armierungsgitter beeinträchtigt nicht die Brandeigenschaften der Schutzfolie. Zur Vermeidung von Kapillareffekten zwischen der Kunststofffolie und der Metallfolie wird eine Verbindungsschicht in Form einer Klebeschicht, beispielsweise einer Silikonschicht, verwendet. Mit dieser Verbindungsschicht wird das Armierungsgewebe mit der Metallfolie verbunden. Die Zwischenräume zwischen den Fäden des Gewebes, das einen Fadenabstand von 15 bis 30 Fäden pro 10 cm aufweist, füllen sich mit dem Klebstoff, beispielsweise dem Silikon der Verbindungsschicht. Das Auftragsgewicht kann 20 - 40 g/m², insbesondere 30 g/m² betragen. Das Auftragsgewicht kann aber auch größer als 40 g/m² sein, wenn der Silikonanteil größer ist beziehungsweise mineralisch gefülltes Silikon verwendet wird. Insofern umfasst die Erfindung auch solche Verbindungsschichten, deren Auftragsgewicht im Bereich zwischen 10 bis 60 g/m² beträgt. Da die Silikonoberfläche mit der Kunststofffolie, also beispielsweise einer PET-Folie, überdeckt ist, können beide voneinander wegweisenden Breitseitenflächen der Schutzfolie verklebt werden. Die Folie besitzt eine hohe Biegsamkeit und eine ausreichende Reißfestigkeit, um einerseits als Dachunterspannbahn und andererseits aber auch als Dampfbremse verwendet werden zu können. Die PET-Folie kann eine Materialstärke zwischen 6 und 25 µm besitzen. Eine bevorzugte Materialstärke liegt in einem Bereich zwischen 8 µm und 15 µm, beispielsweise 8 oder 12 µm.

Die Erfindung betrifft darüber hinaus ein Verfahren zur Fertigung der feuerbeständigen Schutzfolie, wobei auf eine Metallfolie eine Verbindungsschicht aus einer pastösen Masse aufgebracht, beispielsweise aufgewalzt wird. In die Verbindungsschicht wird ein Armierungsgewebe oder -gitter hineingedrückt, so dass sich die die Verbindungsschicht bildende pastöse Masse durch die Fadenzwischenräume des Armierungsgewebes oder -gitters hindurchdrückt. Auf diese Verbindungsschicht wird sodann die Kunststofffolie auflaminiert.

### Kurze Beschreibung der Zeichnungen

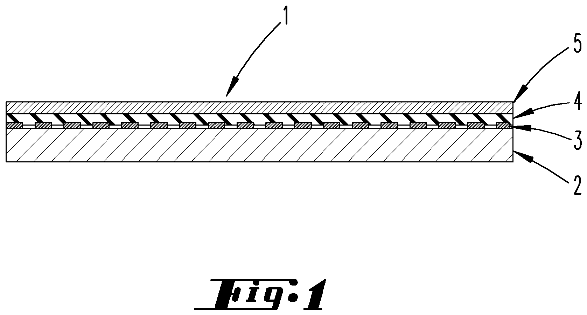

Ein Ausführungsbeispiel der Erfindung wird nachfolgend anhand der Figur 1 im Detail erläutert.

### Beschreibung der Ausführungsformen

Die in der Figur 1 im Querschnitt angegebene Schutzfolie 1 erfüllt die Euroklasse A2 (klassifiziert nach EN 13501-1) hinsichtlich der Feuerbeständigkeit, besitzt eine hohe Wasserdichtigkeit, eine hohe Luftdichtigkeit, die Freiheit von Kapillareffekten, eine ausreichende Reißfestigkeit, eine Biegsamkeit und eine Verträglichkeit mit Kleb- und Dichtstoffen. Sie besitzt darüber hinaus eine Dampfsperrwirkung.

Der Aufbau der erfindungsgemäßen Schutzfolie, die insbesondere im Bereich von Kaminen bei der Dachabdeckung verwendet werden kann, besitzt eine etwa 80 bis 150 µm starke Aluminiumfolie 2, auf der mittels einer Silikonbeschichtung 4, insbesondere einer mineralisch gefüllten Silikonbeschichtung, ein Glasgewebe 3 aufgebracht ist, das einen Fadenabstand von etwa 15 bis 30 Fäden/10 cm aufweist. Die Zwischenräume zwischen den Fäden werden mit der Silikonmasse 4 beziehungsweise einer mineralisch gefüllten Silikonmasse ausgefüllt, die auch der Klebstoff ist, mit dem eine PET-Folie 5 als Deckfolie auf der Silikonschicht 4 gehalten ist.

Die Verbindungsschicht 4 bildet die Haftvermittlung zwischen Metallfolie 2 und Kunststofffolie 5, wobei das Armierungsgewebe oder -gitter 3 darin eingebettet ist.

Zur Herstellung der Schutzfolie wird auf eine Metallfolie 2 zunächst eine Verbindungsschicht 4 in Form einer pastösen Masse, beispielsweise einer Silikonmasse aufgebracht. In diese Silikonmasse wird dann das Armierungsgewebe beziehungsweise -gitter 3 aufgelegt. Das Armierungsgewebe kann derart in die Verbindungsschicht 4 eingedrückt werden, dass sich die die Verbindungsschicht 4 ausbildende pastöse Masse durch die Zwischenräume zwischen den Fäden oder Filamenten des Armierungsgewebes oder -gitters 3 hindurchdrückt. Dies kann mittels Walzen, insbesondere profilierten Walzen erfolgen. Auf die Verbindungsschicht 4 wird sodann eine Kunststofffolie 5 auflaminiert. Dies kann ebenfalls durch eine Walzenanordnung erfolgen.

Das erfindungsgemäße Verfahren bringt den Vorteil, dass in dem von der Verbindungsschicht 4 ausgefüllten Raum zwischen Metallfolie 2 und Kunststofffolie 5 keine Luftzwischenräume und insbesondere keine Kapillaren verbleiben.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine feuerbeständige Schutzfolie, die gekennzeichnet ist durch eine die Verbindungsschicht 4 abdeckende Kunststofffolie 5.

Eine feuerbeständige Schutzfolie, die dadurch gekennzeichnet ist, dass die Verbindungsschicht 4 das Armierungsgewebe oder -gitter 3 und die Kunststofffolie 5 mit der Metallfolie 2 klebend verbindet.

Eine feuerbeständige Schutzfolie, die dadurch gekennzeichnet ist, dass die Metallfolie 2 eine Aluminiumfolie ist und/oder eine Materialstärke von 100 µm aufweist.

Eine feuerbeständige Schutzfolie, die dadurch gekennzeichnet ist, dass das Armierungsgewebe oder -gitter 3 ein Glasgewebe ist und/oder einen Fadenabstand aufweist von 15 bis 30 Fäden/10 cm und/oder das das Flächengewicht des Armierungsgewebes oder -gitters 3 im Bereich zwischen 30 g/m² und 100 g/m², 50 g/m² und 70 g/m² oder insbesondere etwa 58 g/m² ist.

Eine feuerbeständige Schutzfolie, die dadurch gekennzeichnet ist, dass die Verbindungsschicht 4 aus Silikon beziehungsweise mineralisch gefülltem Silikon besteht und/oder mit einem Auftragsgewicht im Bereich zwischen 10 und 16 g/m², in einem Bereich zwischen 20 und 40 g/m² oder insbesondere etwa 30 g/m² auf die Metallfolie 2 aufgebracht ist.

Eine feuerbeständige Schutzfolie, die dadurch gekennzeichnet ist, dass die Kunststofffolie 5 eine PET-Folie ist und/oder eine Materialstärke im Bereich zwischen 8 und 25 µm, bevorzugt in einem Bereich zwischen 10 und 15 µm, insbesondere 12 µm aufweist.

Eine feuerbeständige Schutzfolie, die dadurch gekennzeichnet ist, dass die Schutzfolie 1 einen sd-Wert von mindestens 100 m aufweist.

Eine feuerbeständige Schutzfolie, die dadurch gekennzeichnet ist, dass das Armierungsgewebe oder -gitter 3 in eine von einer pastösen Masse ausgebildeten Verbindungsschicht 4 derart eingedrückt ist, dass die pastöse Masse die Fadenzwischenräume des Armierungsgewebes oder -gitters 3 durchdringt und die Kunststofffolie 5 mit der Metallfolie 2 verbindet.

Ein Verfahren, das dadurch gekennzeichnet ist, dass auf eine Metallfolie 2 eine Verbindungsschicht 4 in Form einer pastösen Masse aufgebracht wird, in die ein Armierungsgewebe oder -gitter 3 derart eingedrückt wird, dass die pastöse Masse die Fadenzwischenräume des Armierungsgewebes oder -gitters 3 durchdringt und die Metallfolie 2 mit der Kunststofffolie 5 verbindet.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

### Liste der Bezugszeichen

- 1: Schutzfolie
- 2: Metallfolie
- 3: Armierungsgewebe oder -gitter
- 4: Verbindungsschicht
- 5: Kunststofffolie

## Patentansprüche

1. Feuerbeständige Schutzfolie (1) mit einer Metallfolie (2), mit einem in eine auf die Metallfolie (2) aufgebrachten Verbindungsschicht (4) eingedrückten Armierungsgewebe oder -gitter (3), wobei die Verbindungsschicht (4) eine Kunststofffolie (5) mit der Metallfolie (2) verbindet, **dadurch gekennzeichnet, dass** die Verbindungsschicht (4) von einer pastösen Masse gebildet ist, in die das Armierungsgewebe derart eingedrückt ist, dass die pastöse Masse die Fadenzwischenräume des Armierungsgewebes oder -gitters (3) durchdringt und dass die Metallfolie (2) eine Materialstärke von 80-200 µm aufweist und eine Breitseitenoberfläche der Schutzfolie (1) die Eigenschaft einer Metallfolie und die gegenüberliegende Breitseite die Eigenschaft einer Kunststofffolie aufweist.

2. Feuerbeständige Schutzfolie nach Anspruch 1, **dadurch gekennzeichnet, dass** die Metallfolie (2) eine Aluminiumfolie ist und/oder eine Materialstärke von 100 µm aufweist.

3. Feuerbeständige Schutzfolie nach einem der vorhergehenden Ansprüche, **dadurch gekennzeichnet, dass** das Armierungsgewebe oder -gitter (3) ein Glasgewebe ist und/oder einen Fadenabstand aufweist von 15 bis 30 Fäden/10 cm und/oder das das Flächengewicht des Armierungsgewebes oder -gitters (3) im Bereich zwischen 30 g/m² und 100 g/m², 50 g/m² und 70 g/m² oder insbesondere etwa 58 g/m² ist.

4. Feuerbeständige Schutzfolie nach einem der vorhergehenden Ansprüche, **dadurch gekennzeichnet, dass** die Verbindungsschicht (4) aus Silikon beziehungsweise mineralisch gefülltem Silikon besteht und/oder mit einem Auftragsgewicht im Bereich zwischen 10 und 60 g/m², in einem Bereich zwischen 20 und 40 g/m² oder insbesondere mit 30 g/m² auf die Metallfolie (2) aufgebracht ist.

5. Feuerbeständige Schutzfolie nach einem der vorhergehenden Ansprüche, **dadurch gekennzeichnet, dass** die Kunststofffolie (5) eine PET-Folie ist und/oder eine Materialstärke im Bereich zwischen 6 und 25 µm, bevorzugt in einem Bereich zwischen 8 und 15 µm, insbesondere 8 oder 12 µm aufweist.

## Claims

1. Fire-resistant protective film (1) comprising a metal foil (2), comprising a reinforcing fabric or mesh (3) pressed into a connecting layer (4) applied to the metal foil (2), the connecting layer (4) connecting a plastics film (5) to the metal foil (2), **characterised in that** the connecting layer (4) is formed by a pasty mass into which the reinforcing fabric is pressed in such a way that the pasty mass passes through the thread interstices of the reinforcing fabric or mesh (3) and **in that** the metal foil (2) has a material thickness of from 80-200 µm and one broad side surface of the protective film (1) has the quality of a metal foil and the opposite broad side has the quality of a plastics film.

2. Fire-resistant protective film according to claim 1, **characterised in that** the metal foil (2) is an aluminium foil and/or has a material thickness of 100 µm.

3. Fire-resistant protective film according to either of the preceding claims, **characterised in that** the reinforcing fabric or mesh (3) is a glass fabric and/or has a thread spacing of from 15 to 30 threads/10 cm and/or the the weight per unit area of the reinforcing fabric or mesh (3) is in the range between 30 g/m² and 100 g/m², 50 g/m² and 70 g/m² or is in particular approximately 58 g/m².

4. Fire-resistant protective film according to any of the preceding claims, **characterised in that** the connecting layer (4) consists of silicone or mineral-filled silicone and/or is applied to the metal foil (2) with an application weight in the range between 10 and 60 g/m², in a range between 20 and 40 g/m² or in particular with 30 g/m².

5. Fire-resistant protective film according to any of the preceding claims, **characterised in that** the plastics film (5) is a PET film and/or has a material thickness in the range between 6 and 25 µm, preferably in a range between 8 and 15 µm, in particular 8 or 12 µm.

## Revendications

1. Feuille de protection résistante au feu (1) avec une feuille métallique (2), avec un tissu ou treillis d'armature (3) pressé dans une couche de liaison (4) appliquée sur la feuille métallique (2), la couche de liaison (4) liant une feuille en matière plastique (5) à la feuille métallique (2), **caractérisée en ce que** la couche de liaison (4) est formée par une masse pâteuse dans laquelle le tissu de renforcement est pressé de telle manière que la masse pâteuse pénètre dans les interstices des fils du tissu ou treillis d'armature (3) et que la feuille métallique (2) a une épaisseur de 80 à 200 µm et qu'une surface d'une face large de la feuille de protection (1) a la propriété d'une feuille métallique et que la face large opposée a la propriété d'une feuille de matière plastique.

2. Feuille de protection résistante au feu selon la revendication 1, **caractérisée en ce que** la feuille métallique (2) est une feuille d'aluminium et/ou présente une épaisseur de matériau de 100 µm.

3. Feuille de protection résistante au feu selon l'une des revendications précédentes, **caractérisée en ce que** le tissu ou treillis d'armature (3) est un tissu de verre et/ou présente un espacement de fils de 15 à 30 fils/10 cm et/ou que le poids surfacique du tissu ou grille d'armature (3) se situe dans la plage comprise entre 30 g/m² et 100 g/m², 50 g/m² et 70 g/m² ou en particulier environ 58 g/m².

4. Feuille de protection résistante au feu selon l'une des revendications précédentes, **caractérisée en ce que** la couche de liaison (4) est constituée de silicone ou de silicone chargée de minéraux et/ou est appliquée sur la feuille métallique (2) avec un poids d'application dans la plage comprise entre 10 et 60 g/m², dans une plage comprise entre 20 et 40 g/m² ou en particulier avec 30 g/m².

5. Feuille de protection résistante au feu selon l'une des revendications précédentes, **caractérisée en ce que** la feuille de matière plastique (5) est une feuille de PET et/ou présente une épaisseur de matériau dans la plage comprise entre 6 et 25 µm, de préférence dans une plage comprise entre 8 et 15 µm, en particulier 8 ou 12 µm.
